(19) Europäisches Patentamt
European Patent Office
Office européen des brevets

(11) **EP 2 902 509 B1**

(12) **EUROPEAN PATENT SPECIFICATION**

(45) Date of publication and mention of the grant of the patent:
**29.08.2018 Bulletin 2018/35**

(51) Int Cl.:
**C21D 8/12** *(2006.01)*     **H01F 1/18** *(2006.01)*

(21) Application number: **14153305.9**

(22) Date of filing: **30.01.2014**

(54) **Grain oriented electrical steel flat product comprising an insulation coating**

Kornorientiertes elektrisches Stahlflachprodukt mit einer Isolationsbeschichtung

Produit plat d'acier électrique à orientation de grains comprenant un revêtement d'isolation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.08.2015 Bulletin 2015/32**

(73) Proprietor: **ThyssenKrupp Electrical Steel GmbH 45881 Gelsenkirchen (DE)**

(72) Inventors:
• **Belgrand, Thierry**
  **62232 Hinges (FR)**
• **Le Bacq, Christophe**
  **62190 Lillers (FR)**
• **Lemaître, Régis**
  **62400 Béthune (FR)**
• **Schepers, Carsten**
  **46348 Raesfeld (DE)**

(74) Representative: **Cohausz & Florack Patent- & Rechtsanwälte Partnerschaftsgesellschaft mbB Bleichstraße 14 40211 Düsseldorf (DE)**

(56) References cited:
**EP-A1- 2 180 082      EP-A1- 2 186 924
JP-A- S54 143 737      JP-A- 2004 107 796
US-A- 4 238 534**

**Description**

The invention concerns grain oriented electrical steel flat product comprising an insulation coating layer being applied on at least one surface of the flat product the insulating coating comprising a matrix containing phosphate and silica.

In the field of the invention "flat products" are strips, sheets, blanks or the like obtained by hot- or cold rolling of a steel base product.

Grain oriented electrical steel is a ferromagnetic iron material that is an important building block for the production of energy efficient transformers and large, high performance generators. In the form of laminated, wound or punched sheets, it is the essential core material of electrical transformers such as distribution transformers, power transformers and small transformers. Typically, grain oriented electrical steel products are in the shape of strips with thicknesses between 0.15 mm and 0.50 mm.

To meet the high demands that a grain oriented electrical steel product has to fulfill when being used as core material in an electrical transformer, an insulation coating is usually applied to the surface of the grain oriented electrical steel product.

In transformers, apart from energy losses, the noise generated during operation is an important quality determinant. The demands that need to be met regarding the noise levels generated during operation of transformers are constantly increasing and subject to ever-more stringent legal requirements and standards. For example, acceptance of large transformers in the vicinity of residential buildings is crucially dependent upon the noise emissions generated by such transformers. The operation noise is thought to be caused by a physical effect known as magnetostriction and is influenced inter alia by the properties of the insulation coating applied to the grain oriented electrical steel product used as core in the transformer.

It is known that the insulation coating applied to a grain oriented electrical steel product has a positive effect on minimization of the hysteresis losses. The insulation coating can transfer tensile stresses to the base material, which not only improves the magnetic loss values of the grain oriented electrical steel product but also reduces the magnetostriction, thereby having in turn a positive effect on the noise behavior of the finished transformer.

The magnetic properties of the grain oriented electrical steel product will only be achieved if the crystallographic orientation is in the form of a special texture, called Goss texture, so that the direction of easy magnetization is the rolling direction. Processes for obtaining the Goss texture are known to the person skilled in the art and involve cold rolling and annealing steps leading to various recrystallization processes. Beside the texture, the domain structure also has an influence on the magnetic properties of the grain oriented electrical steel product. The domain structure can be influenced by physical effects in such a way that the energy loss caused by reversal of magnetism is minimized. In this context, one important factor is the tension imparted onto the ferromagnetic base material by the insulation coating.

Furthermore, it is known from the literature (see e.g. P.Anderson, "Measurement of the stress sensitivity of magnetostriction in electrical steels under distorted waveform conditions", Journal of Magnetism and Magnetic Materials 320 (2008) e583-e588) that a high imparted tension results in improved (i.e. lower) magnetostriction and, thus, better noise behavior of the material and the finished transformer. In addition, the sensitivity of core losses and magnetostriction against external stresses in a transformer core is also decreased, when a grain oriented electrical steel product with an insulation coating is used.

In summary, the insulation coatings currently used in the art have the following three main functions:

- electric insulation of the metallic base material

- imparting a tensile stress to the metallic base material

- providing chemical and thermal resistivity to the metallic base material.

The most common and successfully employed electrical insulation coating for grain oriented electrical steel has a two layer structure, comprising a so-called glass film and a phosphate coating deposited on top of it.

The glass film typically consists of magnesium silicate, such as forsterite, which is deposited in form of a thin layer on the metal surface provided by the grain-oriented electrical steel product. The glass film is produced by high-temperature annealing in a reaction between added magnesium oxide, silicon and iron oxides, which is formed at the metal surface during the annealing process.

Formation of the phosphate coating involves applying an aqueous solution of metallic phosphate containing colloidal silica and chromium compounds onto the surface of the steel sheet and baking the same at temperatures in the range of 800 °C to 950 °C. The phosphate coating is usually applied on top of the glass film. However, it is also possible to apply the phosphate directly onto the steel surface with no glass film in between.

Compositions and treatment solutions for applying the phosphate coatings of the prior art onto the grain oriented electrical steel usually consists of

- one or more primary phosphates (e.g. magnesium or aluminum phosphate) diluted in water

- one or more colloidal oxide compounds, e.g. colloidal silica

- one or more chromium compound, e.g. chromium trioxide or chromic acid

Such a composition is e.g. described in Japanese Patent JP 1971000075233 and U.S. patent 3,856,568. According to these prior art documents, a main function of the Cr-compounds in the composition is the avoidance of gas bubbles - and resulting porosity - in the resulting coating layer by bonding phosphoric acid set free during the baking process. Thereby, the tension imparted to the base material by the coating layer is improved. Cr-compounds are also thought to improve the corrosion resistance of the phosphate based coating and contribute to the stability of the treatment composition.

However, a clear disadvantage of the use of Cr-compounds in the standard insulation coatings of the prior art is its toxicity and cancerogenicity. Its use poses significant risks during handling and storage. Laws therefore more and more restrict the use of hazardous Cr-compounds, especially in electrical equipment.

Unfortunately, simply omitting the Cr-compounds without replacement by other additives does not lead to acceptable results. Efforts for replacing or obviating the need for Cr-compounds in coating layers for grain oriented electrical steel have already been made in the past. However, there still is a need for a potent replacement agent to substitute Cr-compounds in coating layers for grain oriented electrical steel products.

WO 2013/064260 A1 describes a chromium-free coating mixture that comprises a metal phosphate, silica particles and an organosilane.

EP 0 555 867 describes a crystalline-amorphous coating system comprising a sol, which can be of $SiO_2$, $TiO_2$ or other oxides, and a second component, which may for example be a phosphate.

WO 2009/101129 A2, which corresponds to EP 2 252 722 describes the addition of colloid stabilizers and pickling inhibitors in order to replace functions of the omitted chromium component. However, while the stability of the composition is improved, the tension imparted on the ferromagnetic base material is not as good as in Cr-containing reference products.

DE 10 2010 054 509 A1 aims to further improve the phosphate coatings described in WO 2009/101129 A2 by further adding Cr-III-compounds to the treatment solution. The use of Cr-free insulating layers containing one or more of silica, alumina or titania particles is disclosed in the documents EP-A1-2180082, EP-A1-2186924 and in JP S54 143737. Against this background of prior art, it is an object of the invention to provide a grain oriented electrical steel flat product with an insulation coating, which obviates the need to add chromium compounds to the insulation coating. Accordingly, it is an object of the present invention to provide a potent replacement agent for Cr-compounds in conventional coating layers for grain oriented electrical steel products.

This object is solved by the grain oriented electrical steel flat product according to claim 1.

Advantageous embodiments of the invention are indicated in the dependent claims and will be explained in detail in the following together with the basic idea of the invention.

The composition according to the invention for forming an insulation coating on grain oriented electrical steel comprises phosphate and silica and is characterized by a particular type of filler particles comprised therein. These filler particles, i.e. the filler particles according to the invention, comprise a core and a shell surrounding said core (core-shell filler particles). "Surrounding", as used herein, is to be understood in the sense of "at least partially surrounding". The material of the shell of the particles is selected such that the particles are bonded to the matrix by their shell.

An optimized effect of the filler particles being present in the insulation layer of the grain oriented electrical steel flat product according to invention can be obtained if the insulation coating layer comprises 0.1 - 50 wt.-% filler particles.

The filler particles according to the invention are particles that have an average diameter of about 10 to 1000 nm (i.e. nanoparticles) and that can be used as filler material in coatings. The individual particles each comprise a core as basic building unit and a shell formed from a material different from the material of the core and at least partially surrounding the same. In practice, such core-shell filler particles are obtainable by preparing particles from the core material and coating them with the material that shall form the shell.

Such particles are in principle known, however, so far used only as pigments in the production of solvent- and water-based paints and varnishes. To obtain these filler particle pigments, a core composed of e.g. titanium or zirconium oxide is surface treated with a material such as silicon oxide or aluminum hydroxide, and, optionally, suitable organic surface modifiers, to improve dispersibility in the various dispersion systems used for the production of paints and varnishes.

Surprisingly, it turns out that by adding such filler particles to an insulation coating for a grain oriented electrical steel flat product the need for Cr-containing compounds in these compositions can be obviated. Hence, the invention teaches the use of core-shell filler particles as potent replacement agents for Cr-compounds in conventional coating layers for grain oriented electrical steel products.

For the inventive use as component of the insulation coating of grain oriented electrical steel, the improved dispersibility of these particles is not the only decisive factor. Rather, experimental trials have revealed that, surprisingly, the porosity of the finished layer of the insulation coating is decreased and the imparted tension of the coating to the base metal is increased in comparison to the use of a Cr-free coating without any particles or a Cr-free coating with non-core/shell high Young's modulus particles, e.g. pure $TiO_2$ particles lacking a shell.

The layer of insulation coating obtained in accordance with the invention is characterized by a remarkable density and minute levels of porosities. This high density and low porosities of the insulation coating that is achieved by the invention ensures that the tension imparted by the coating layer is homogeneously distributed across the whole surface of the electrical steel.

Consequently, the thus-achieved decrease of the steel's magnetostriction level is continuously effective over its entire surface with little to no fluctuation. In line with the studies of P. Anderson (see above), it is expected that use of grain-oriented electrical steel products coated with a composition according to the invention as core material for transformers will significantly reduce the noise behavior of the finished transformers.

Further features and advantages of the present invention will emerge from the following detailed description of some of its embodiments shown inter alia by way of nonlimiting examples in the accompanying drawings, in which:

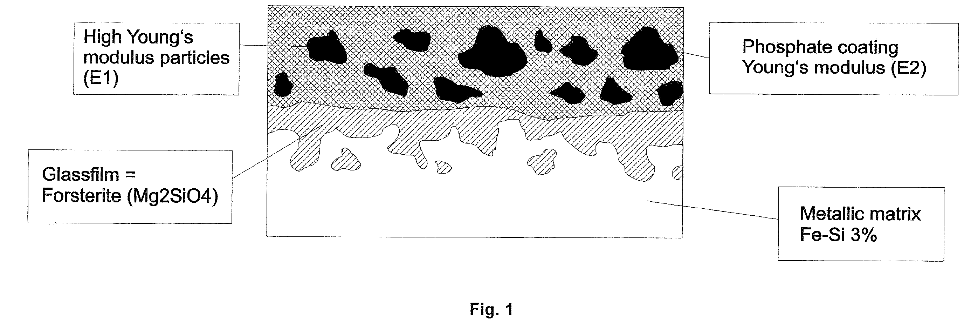

Fig. 1 is a schematic illustration (cross section) of the surface layer structure of a grain oriented electrical steel bearing an insulation coating according to the invention, which comprises high Young's modulus core-shell filler particles in the outer-most layer;

Fig. 2 is a schematic illustration of the method used in example 2 of the present disclosure to determine the sedimentation speed;

Fig. 3 is a data plot demonstrating the effect of the volume fraction of filler particles present in the insulation coating on the effective Young's modulus of a grain oriented electrical steel coating according to the invention (cf. example 3 for details);

Fig. 4a,4b depict images obtained by scanning electronmicroscopy of cross section specimen of a) a Cr-free coating without particles and b) a Cr-free coating according to the invention comprising high Young's modulus core-shell filler particles (cf. example 3 for details).

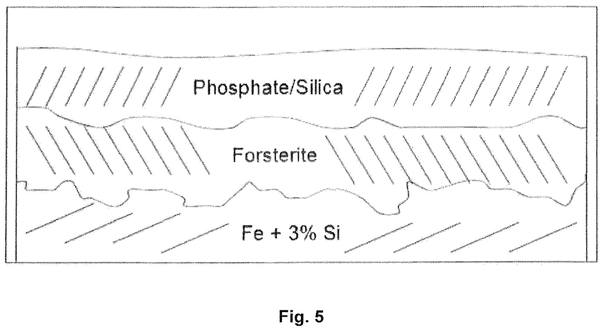

Fig. 5 is a schematic illustration (cross section) of the surface layer structure of a standard prior art grain oriented electrical steel bearing a two-layer insulation coating comprising a glass- and a phosphate layer;

According to the invention, "core-shell filler particles" are defined as filler particles which comprise a core and a shell at least partially surrounding said core. Throughout this disclosure, the term "filler particle" stands for such "core-shell filler particles" of the invention.

According to the invention, the filler particles used in the insulation coating according to the invention can have a variety of particle sizes, however generally display an average diameter of about 10 to 1000 nm.

The particle size of the filler particles can be determined e.g. by electron microscopy. In case of irregularly shaped particles, the equivalent diameter (i.e. the diameter of a sphere with equal surface or volume) is to be determined. Practical experiments have shown that excellent results can be achieved when the filler particles used according to the invention have an average diameter of about 10 to 600 nm, in particular from 100 to 400 nm. Particularly satisfying results were achieved with particles having an average diameter of 200 to 300 nm.

In one embodiment of the invention, the core of the filler particles used in accordance with the invention consists of a material that imparts stiffness to the particle, whereas the material that makes up the shell mediates interactions with the other components of the insulation coating, thereby enhancing the dispersibility of the core-shell filler particles therein.

According to the invention, the material forming the core of the filler particles is a high Young's modulus material characterized by a Young's modulus of at least 200 GPa. If the Young's modulus amounts to at least 250 GPa optimized effects of the filler particles can be expected. The high Young's modulus filler particles must allow a suitable cutting of the coated GO electrical steel metal. Therefore the Young's modulus should not exceed 650 GPa. Optimized effects of the presence of the filler particles can be obtained if the Young's modulus of the filler particles amounts to 250 - 650 GPa.

The Young's modulus is a well-known measure of the stiffness of an elastic material. Methods to determine this parameter are known to the skilled person. The Young's modulus values specified herein can be extracted from the "Materials Science and Engineering Handbook", third edition - CRC Press LLC, 2001 (Table 223. YOUNG'S MODULUS OF CERAMICS - p788).

A variety of high Young's modulus materials can be used to form the core of the filler particles employed according to the invention. The skilled person can easily test the suitability of a given high Young's modulus material for the purpose of the invention by employing particles derived therefrom in the test protocols specified in the examples further below.

High Young's modulus materials that have proven to be particularly suitable materials for the core according to the invention are transition metal oxides and metal oxides. Accordingly, the core of the filler particles may comprise at least one transition metal oxide and/or metal oxide. In a particularly practical embodiment, the core consists thereof. Practical experiments have revealed that highly satisfactory results are achieved, when said transition metal oxide and/or metal oxide is an oxide of aluminum, titanium and/or zirconium, i.e. $Al_2O_3$, $TiO_2$ and/or $ZrO_2$.

Regarding the composition of the shell, a variety of materials can be used. It is important that the material for the shell mediates some kind of interaction or "bonding" to the other components present in the composition and the coating, in particular to the phosphate and silica components. In case the matrix of the insulation layer is based on metal phosphate and colloidal silica, the material forming the shell should mediate interactions to the metal phosphate and colloidal silica. The interactions can be of non-covalent or covalent nature.

According to another embodiment, the material for the shell comprises an aluminum compound, a siliceous compound or a mixture thereof. Best results will be obtained if the shell consists of the said compounds. Particularly good results were achieved in cases where the shell comprised or consisted of aluminum oxide, aluminum hydroxide and/or silica, in particular $Al_2O_3$ and/or $SiO_2$.

Experiments testing high Young's modulus particles made up e.g. of $TiO_2$ and/or $ZrO_2$, however, lacking a shell as described above, revealed that the shell is crucial for achieving the inventive effect. Use of such "naked" particles in insulation coatings for electrical steel resulted in unsatisfactory properties of the finished layers, in particular, the "bonding" of the $ZrO_2$ or $TiO_2$ to the silica/phosphate component of the insulation coating was weak, the pores not fully filled and the imparted tension of the coating not high enough. This underscores the importance of the core-shell structure of the particles for the inventive teaching.

The material for the shell and core, of course, must not be the same. According to an embodiment of the invention, if both shell and core comprise $Al_2O_3$, they may not do so to the same extent. According to a particular embodiment, if both shell and core comprise $Al_2O_3$, the shell must comprise a higher weight percentage of $Al_2O_3$ than the core. According to yet another embodiment, the core may not contain $Al_2O_3$ if the shell comprises or consists primarily of $Al_2O_3$.

In test trials with a variety of materials for the core and shell, superior results were achieved with the following combination of core and shell materials: A core consisting primarily of $TiO_2$ and/or $ZrO_2$ and a shell consisting primarily of $Al_2O_3$ and/or $SiO_2$.

Throughout this disclosure, "consisting primarily of" means consisting to an extent of greater than 75 wt-%, in particular greater than 85 wt-% or 95 wt-% of a given material.

Such core-shell filler particles are commercially available as white pigments for use in the production of solvent- and water-based paints and varnishes. Examples of commercially available core-shell filler particles that can be used in the insulation coating according to the invention are, for example, TIOXIDE® R-HD2 from Huntsman Pigments or Titanium dioxide pigmental Crimea $TiO_x$-230 from Crimea TITAN.

Whereas suitable core shell particles have already been described as white pigments for paint and varnishes, the invention teaches, for the first time, the use of such filler particles as components of an insulation coating for grain oriented electrical steel. Surprisingly, such use of the filler particles results in improved insulation properties, enhanced imparting of tensile stress to the metallic base material by the insulation material, and, importantly, obviates the need for Chromium-compounds in the insulation coatings of the prior art. This is surprising, because the white pigment core-shell filler particles of the prior art have mainly been attributed with an improved dispersibility of the pigments in the common solvents used for the production of paints and varnishes.

Practical experiments have shown that for the inventive effect to be achieved, it is sufficient if the shell of the filler particles is relatively thin as compared to the size of the entire filler particle. Accordingly, the core-shell filler particles may consist primarily of core material, which is coated with a thin layer of shell material. For most applications, the average thickness of the shell may range from 2 nm to 20 nm. Best results may be expected if the thickness of the particles ranges from 3 nm to 10 nm.

The core material of the filler particles may make up 80.0 to 99.9 wt-%, particularly 90.0 to 99.5 wt-%, e.g. 95.0 to 99.0 wt-%, of the total weight of the filler particles. Accordingly, the shell of the filler particles may make up 0.1 to 20.0 wt-%, particularly 0.5 to 10.0 wt-%, e.g. 1.0 to 5.0 wt-% of the total weight of the filler particles.

In practice, the filler particles will usually not be formed as perfectly spherical cores with an impeccably contiguous outer shell. Rather, due to the usual methods of production for such particles, they will typically be composed of two or more phases of various geometries or morphologies such as, for example, core/shell or core/sheath particles, core/shell particles with shell phases incompletely encapsulating the core, core/shell particles with a multiplicity of cores, and interpenetrating network particles. In all of these cases the majority of the surface area of the particle will be occupied by at least one outer phase (called "shell" throughout this disclosure) and the interior of the particle will be occupied by at least one inner phase (called "core" throughout this disclosure). An economically feasible way of producing filler particles suitable for use according to the present invention is milling the material for the core into particles of a suitable size and coating the same with the material for the shell, which can be applied in the form of a powder or slurry.

In the insulation layer composed according to the invention, the concentration of filler particles may range from 0.1 to 50.0 wt-%, particularly from 1 to 40.0 wt-%, e.g. from 10 to 30.0 wt-%, based on the total weight of the composition.

If a Cr-free insulating layer containing filler particles in this concentration range is applied to a grain oriented electrical steel, this affords at least the same coating performance in terms of tension and magnetic properties as phosphate based coatings of the prior art in which Cr-compounds are present.

Just like the compositions for forming insulation coatings on grain oriented electrical steel known from the prior art, the composition being applied to form the coating on the electrical steel strip flat product according to the invention is preferentially a liquid. However, other forms, such as pastes are possible for certain applications as well. For example, the composition can be aqueous. In another embodiment, the phosphate is dissolved in the water present in the composition, i.e. forms a solution. The same can be true for other water-soluble components present in the composition. The filler particles of the invention are preferably dispersed in the liquid composition. Whereas water-based compositions are preferred according to the invention, other solvents are possible in principle, especially solvents that show a similar polarity and hydrophilicity as compared to water. Water-based compositions have however proven particularly useful and cost-effective in practice and are therefore preferred.

The insulating coating of the invention is of the phosphate-type described above for the prior art. Hence, according to a preferred embodiment, the coating comprises at least one metal phosphate, in particular a metal phosphate selected from the group consisting of aluminum phosphate, nickel phosphate and magnesium phosphate, or a mixture thereof.

In principle, the insulating layer provided on a flat product according to the invention can contain the same amount of phosphate as published for the prior art phosphate-based compositions. As such, the concentration of phosphate, in particular metal phosphate, in the insulating layer can range from 0.1 to 50.0 wt-%, particularly from 1.0 to 45.0 wt-%, e.g. from 10.0 to 40.0 wt-%, based on the total weight of the insulating layer's composition. A phosphate or metal phosphate content above 55 wt-% results in a cured coating having a reduced coating integrity. A phosphate or metal phosphate content below 20 wt-% results in a coating which is porous and which does not provide enough tension to the grain oriented electrical steel product. Compositions comprising 25 to 50 wt-%, in particular 30 to 45 wt-% phosphate or metal phosphate, based on the total weight of the composition, are preferred as a good balance between coating integrity and tension.

The insulating layer provided on a electrical steel flat product according to the invention benefits from the presence of silica, in particular colloidal silica. According to an embodiment of the invention, the concentration of silica and/or colloidal silica in the insulating layer is from 20 to 65 wt-%, preferably from 25 to 50 wt-%, particularly preferred from 30 to 40 wt-%, based on the total weight of the composition. A silica content above 65 wt-% can result in viscous coating mixtures that are difficult to process, whereas a silica content below 20 wt% reduces packing density which limits the amount of coating tension that can be provided to the grain oriented electrical steel product.

According to a particularly preferred embodiment of the invention, the major components of the inventive composition - besides water or solvent - are phosphate and silica. In this respect, the composition may consist primarily of water, phosphate and silica, with the concentration of filler particles being as stated above. Practical experiments have shown that it can be advantageous if the composition comprises a colloidal stabilizer and/or a pickling inhibitor. These additives are described in detail in WO 2009/101129 A2. The same additives are also suitable for the compositions and coatings of the present invention.

Accordingly, colloid stabilizers are disclosed in page 8, second paragraph to page 11, third paragraph of WO 2009/101129 A2. Similarly, particularly suited pickling inhibitors are disclosed from page 12, second paragraph to page 15, second paragraph of WO 2009/101129 A2. Esters of phosphoric acid, in particular monoethyl-phosphate and/or diethyl-phosphate, are preferred colloid stabilizer according to the invention. Preferably, the pickling inhibitor is selected from the group consisting of a thiourea-derivative such as diethyl-thiourea, a C2-10-alkinol such as prop-2-in-1-ole or butin-1,4-diol, a triazin-derivative, thioglycolic acid, a C1-4-alkylamine, hexamethylentetramine, a hydroxyl-C2-8-thiocarbonic acid and a fatty alcohol polyglycol ether or combinations thereof.

Preferred embodiments, in particular regarding the composition of the insulating layer, starting materials and properties, have been described above in detail for the inventive composition for forming an insulation coating on grain oriented electrical steel. Of course, these embodiments equally apply to the inventive insulation coating which is obtainable by using the inventive composition in a method for producing coated grain oriented electrical steel. This insulation coating, optionally characterized by any one or any combinations of features described above for the composition, also forms part of the invention.

Research leading up to this invention has demonstrated that in comparison to the use of a Cr-free insulation coating without any high Young's modulus particles or Cr-free insulation coatings with non-core/shell high Young's modulus particles, e.g. pure $TiO_2$ particles lacking a shell, the inventive insulation coating features an improved effective Young's modulus, independent of the presence or absence of Cr in the coating.

The skilled person will appreciate that the thickness of the insulation coating depends on the intended application of the coated grain oriented electrical steel product and the demands regarding insulation, resistivity and level of magnetostriction the material shall fulfill. In practice, satisfactory results could already be achieved when the insulation coatings of the invention had a thickness in the range of 0.5 to 10 $\mu$m. Layer thicknesses in the range of 1.0 to 5.0 $\mu$m, particularly 2.0 to 4.0 $\mu$m, are preferred for the insulation coating according to the invention.

The tension induced by a given coating is for the most part proportional to the thickness of the coating. Thus, when the thickness is lower than 0.5 $\mu$m, the tension induced by a coating may be insufficient depending on purposes. In contrast, when the thickness thereof exceeds 10.0 $\mu$m, the stacking factor sometimes decreases more than necessary. The skilled person knows how to adjust the thickness of the insulation coating to a desired target value, e.g. by adjusting the concentration, the applying amount or the applying conditions (e.g., pressing conditions of a roll coater) etc., of the composition used for insulation coating.

In a preferred embodiment of the invention the thickness of the insulation coating is chosen such that the grain oriented steel product coated therewith is thermally stable up to 850°C at atmospheric pressure allowing the coating to withstand processing conditions employed during the thermal flattening of the coated strip in a continuous annealing furnace.

As described above and demonstrated by the examples below, the inventive use of core-shell filler particles allows Cr-free compositions and as a result Cr-free insulation coatings. Of course, the composition and insulation coating of the invention may still contain chromium. Preferably, however, the composition and insulation coating according to the invention do not substantially contain Cr. In particular, the concentration of chromium in the composition and the resulting insulation coating can be less than 0.2 wt-%, preferably less than 0.1 wt-%, and most preferably less than 0.01 wt-%, based on the weight of the entire composition or insulation coating.

The invention also provides a method for producing grain oriented electrical steel with an insulation layer, the process comprising the steps of applying a layer of a composition as described in detail above to the surface of an electrical steel and baking the same to form the insulation layer.

The composition of the invention can be applied to the surface of the electrical steel irrespective of whether a glass film has been formed on the surface or not. Preferably, however, prior to applying the composition of the invention, a glass film consisting of magnesium silicate, such as forsterite, is produced by high-temperature annealing in the presence of magnesium oxide as described in the prior art.

The composition of the invention can be applied to the surface of the electrical steel by methods known from the production of coated grain oriented electrical steel involving phosphate-based treating solutions of the prior art. The composition of the invention may be diluted by adding water or the like to adjust the density for improvement of coating properties. For application of the composition, known measures, such as a roll coater, can be used. According to a preferred embodiment, the composition of the invention is applied by coating rolls.

The heat-curing to form the insulation coating is typically performed by baking at temperatures in the range of 800°C to 950°C. Practical experiments have shown that baking within this temperature range, results in an optimal tension being induced by the resulting coating.

By using the composition of the invention in methods known to the skilled person for producing grain oriented electrical steel products, it is possible to obtain an inventive grain oriented electrical steel product comprising a layer of insulation coating as defined above.

"Grain oriented electrical steel product", as used herein, can be any product made of grain oriented electrical steel. According to a preferred embodiment of the invention, the grain oriented electrical steel product is a sheet or strip, in particular a laminated, wound or punched sheet. If intended for use as core material of electrical transformers, the grain oriented electrical steel product according to the invention is preferably in the shape of strips with thicknesses between 0.15 mm and 0.50 mm.

A further increase of the tension on the ferromagnetic core material of the grain oriented electrical steel product of the invention can be achieved by depositing a glass film between the insulation coating according to the invention and the electrical steel. "Glass film" as used herein means a ceramic-like layer, which preferably contains mainly magnesium silicate, and, optionally, embedded sulfides. The glass film is preferably formed in a conventional manner as described for the prior art, i.e. during the coarse-grain annealing of magnesium oxide and iron-silicon oxide on the surface of the electrical steel.

The insulation coating of the invention and the optionally present glass film may be deposited on top and/or bottom of the grain oriented electrical steel product of the invention. Preferably, the insulation coating of the invention and the glass film layer are present on the top and the bottom of the grain oriented electrical steel product of the invention.

The inventive grain oriented electrical steel product described herein is suitable for various applications. It is particularly useful as improved core material in electrical transformers. Applications for the inventive grain-oriented electrical steel include use in power transformers, distribution transformers, small transformers, current transformers, shunt reactors, wound cores and power generators. The teaching of the invention thus also includes such devices comprising a grain-oriented electrical steel product according to the invention.

In summary, the invention provides insulation coatings, compositions, grain oriented electrical steel products and devices comprising the same, which show the following combined advantages:

1. Obviating the need for Cr-compounds in the compositions used for insulation coatings on grain oriented electrical steel. This is an important advantage in terms of working safety and environmental regulations.

2. Improved imparted tensile stress of the insulation coating to the ferromagnetic base material. This is an important factor to reduce core loss and the noise of transformers built from the grain oriented electrical steel products of the invention.

3. Improved magnetostriction and adhesion. This is an important advantage in terms of lowering the noise level of transformers to comply with possible future regulations on noise emission thresholds.

In addition, grain oriented electrical steel sheets coated in the inventive manner have proven to fulfill all basic physical and chemical demands that insulation coating layers of grain oriented electrical steel sheets must meet according to the current industrial practice.

**Examples**

Hereinafter, the advantages achieved by the invention as well as certain exemplary embodiments are described in more detail and specifically with reference to the examples, which, however, are not intended to limit the present disclosure.

Example 1

A series of aqueous compositions for insulation coatings according to the invention was prepared with the compositions given in Table 1 below. For comparative purposes, the series also included a set of reference solutions that do not form part of the invention. If not otherwise stated, all percentages are given in wt-%, for lines 1 to 21 of Table 1, the wt-% values are based on the total weight of the slurry composition.

Example 2

Key physico-chemical properties of the compositions prepared in example 1 were assessed. In particular, the sedimentation behaviors, viscosities and speeds of gelification were studied. The results are summarized in Table 2 below.

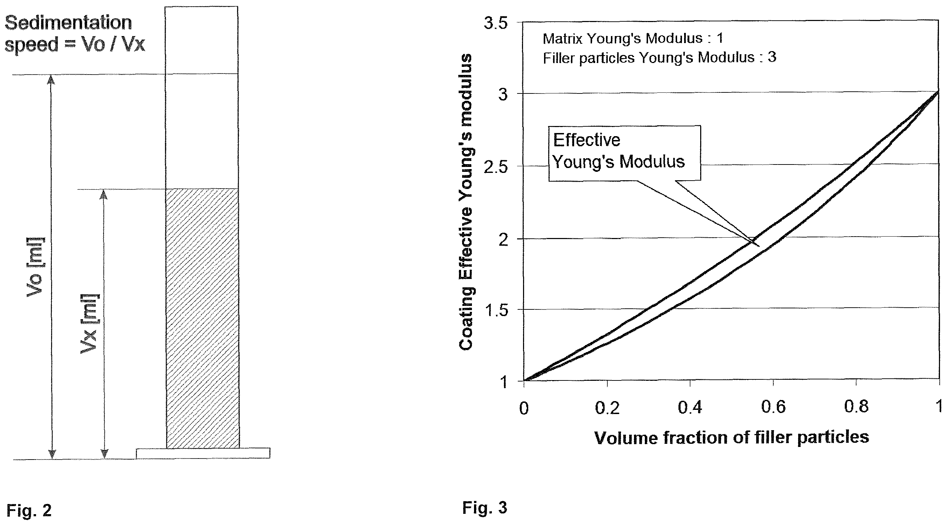

The sedimentation behavior as a function of time was determined according to the method shown in Fig. 2. To this end, the composition was incubated for 6 h at room temperature. In case a phase separation was observable, the volumes of the two phases were determined. The sedimentation after 6 hours is given by the percentage of total volume to volume of the sedimented phase (cf. Fig. 2, $100 * V_0/V_x$).

The viscosities were measured directly after preparation of the respective solutions. The measurements were carried out using a Brookfield DV-II+ viscosimeter (spindle: LV1, drive: 50 rpm, T = 50°C).

The parameter "time until gelification" in Table 2 is the time needed until the solution gelifies. The time point of gelification is accompanied by an abrupt increase of viscosity at 50°C, which allows determination of the same. The longer the time until gelification of a particular composition is, the more attractive the solution is from an industrial point of view.

As can be seen from the results in Table 2, the sedimentation behavior of the composition comprising core shell particles according to the invention is superior to comparative examples comprising non-core-shell particles or core shell particles with an organic shell.

Furthermore, also the viscosities and the time until gelification are positively influenced by the presence of core shell particles in the treating solutions according to the invention.

Example 3

Grain oriented electrical steel samples of 0.30 mm thickness in the state after box annealing (i.e. with a coating of forsterite according to the state of the art) were coated with treating solutions 1-21 listed in Table 1. The coating was performed by rolls of a coater. The coating thickness after baking was measured by means of SEM FEG microscope, or of magnetic inductive device (e.g. Fischer Permascope) and determined to be 2.25 pm. The baking temperature was varied in the range of 800°C to 950°C.

It was found that addition of core-shell filler particles to the composition according to the invention is accompanied by an enhanced Young's modulus of the resulting coating layer, so called Effective Young's Modulus. Young's modulus is determined by the Oberst beam method.

This effect can be illustrated by applying the Hashin-Shtrikman model according to the following formula:

$$E_2 + \frac{c_1}{\frac{1}{E_1 - E_2} + \frac{c_2}{3E_2}} \le E_{eff} \le E_1 + \frac{c_2}{\frac{1}{E_2 - E_1} + \frac{c_2}{3E_1}}$$

$c_1$ volume fraction of the filler particles
$c_2$ volume fraction of the final coating matrix ; $c_2 = 1 - c_1$

Fig. 3 depicts the corresponding data plot demonstrating the effect of the volume fraction of filler particles present in the insulation coating on the effective Young's modulus of a grain oriented electrical steel coating according to the invention.

Key properties, including imparted tension and porosity, of the various grain oriented electrical steel sheets coated with the treating solutions of Table 1 were determined. Table 3 summarizes the results for the series of samples obtained when setting the baking temperature to 850°C. These results are representative of the further experiments performed with specimen obtained under different baking conditions.

The curvatures of the grain oriented electrical steel samples were determined before and after they were coated on one side with a composition according to table 1. From this difference in curvature, the tension imparted by the insulation coating could be calculated. The results are shown in Table 3.

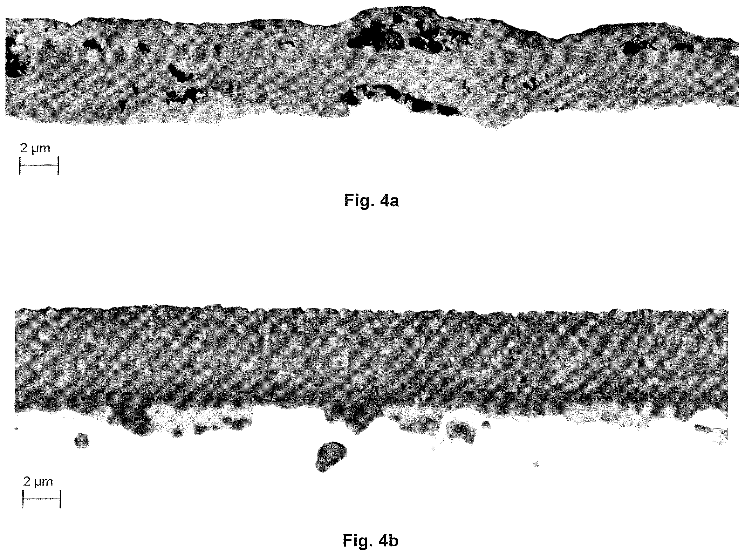

In addition, the porosities were evaluated by examining cross-section images recorded with a scanning electron microscope (SEM). Fig. 4a) and 4b) depict representative cross section images of a coating obtained with composition # 3 (comparative example) and #6 (according to the invention), respectively.

As can be seen from the results summarized in Table 3, the inventive compositions result in a much higher imparted tension of the finished insulation coatings, as compared to the Cr-free references. The positive effect that the filler particles according to the invention have on the imparted tension is comparable to that of adding Cr-compounds according to the prior art (sample #1) or even better.

Without wanting to be bound to scientific theory, it is believed that the reason for this positive effect is an improved density (i.e. less porosity) combined with a higher effective Young's modulus of the inventive coatings, as compared to Cr-free coatings.

The low level of porosity observed in coatings prepared according to the invention in combination with the fact that Cr-compounds can be successfully omitted from the inventive insulation coating, is one of the key advantages provided by the teaching of the invention.

Experimental trials seem to indicate what the reason for the improvement in imparted tension and porosities of the insulation coatings according to the invention may be. In terms of microstructure, the coatings according to the invention feature an uniquely formed and dense composite material, which seems to result in the observed enhanced physical properties and a higher effective Young's modulus while maintaining a similarly low thermal expansion coefficient after the baking process as the conventional Cr-containing insulation coatings of the prior art.

Table 1

| No | Metal phosphate (conc. 50%) | Colloidal silica (conc. 30%) | High Young's modulus filler particle (wt-% in solution) | $CrO_3$ (conc. 50%) | $CS^1 + PI^2$ | Example according to the invention? |
|---|---|---|---|---|---|---|
| 1 | 43% $Al(H_2PO_4)_3$ | 50% | - | 7% | - | NO |
| 2 | 47% $Al(H_2PO_4)_3$ | 50% | - | - | 3% | NO |
| 3 | 47% $Al(H_2PO_4)_3$ | 53% | - | - | - | NO |
| 4 | 41% $Al(H_2PO_4)_3$ | 55% | 1% $TiO_2$ (alumina shell) | - | 3% | YES |
| 5 | 40% $Al(H_2PO_4)_3$ | 54% | 3% $TiO_2$ (alumina shell) | - | 3% | YES |

(continued)

| No | Metal phosphate (conc. 50%) | Colloidal silica (conc. 30%) | High Young's modulus filler particle (wt-% in solution) | $CrO_3$ (conc. 50%) | CS[1]+PI[2] | Example according to the invention? |
|---|---|---|---|---|---|---|
| 6 | 39% $Al(H_2PO_4)_3$ | 52% | 6% $TiO_2$ (alumina shell) | - | 3% | YES |
| 7 | 40% $Al(H_2PO_4)_3$ | 54% | 6% $TiO_2$ (alumina shell) | - | - | YES |
| 8 | 38% $Al(H_2PO_4)_3$ | 50% | 9% $TiO_2$ (alumina shell) | - | 3% | YES |
| 9 | 39% $Al(H_2PO_4)_3$ | 52% | 9% $ZrO_2$ (alumina shell) | - | - | YES |
| 10 | 39% $NiHPO_4$ | 52% | 6% $TiO_2$ (alumina shell) | - | 3% | YES |
| 11 | 40% $NiHPO_4$ | 54% | 6% $TiO_2$ (alumina shell) | - | - | YES |
| 12 | 38% $NiHPO_4$ | 50% | 9% $TiO_2$ (alumina shell) | - | 3% | YES |
| 13 | 39% $MgHPO_4$ | 52% | 6% $TiO_2$ (alumina shell) | - | 3% | YES |
| 14 | 40% $MgHPO_4$ | 54% | 6% $TiO_2$ (alumina shell) | - | - | YES |
| 15 | 38% $MgHPO_4$ | 50% | 9% $TiO_2$ (alumina shell) | - | 3% | YES |
| 16 | 40% $Al(H_2PO_4)_3$ | 47% | 10% $TiO_2$ (alumina/ silica shell) | - | 3% | YES |
| 17 | 42% $Al(H_2PO_4)_3$ | 49% | 6% $TiO_2$ (no shell) | - | 3% | NO |
| 18 | 40% $Al(H_2PO_4)_3$ | 47% | 10% $TiO_2$ (organic shell) | - | 3% | NO |
| 19 | 40% $Al(H_2PO_4)_3$ | 47% | 10% $Al_2O_3$ (no shell) | - | 3% | NO |
| 20 | 40% $Al(H_2PO_4)_3$ | 47% | 10% $Al_2O_3$ (silica shell) | - | 3% | YES |
| 21 | 33% $Al(H_2PO_4)_3$ | 39% | 25% $ZrO_2$ (no shell) | - | 3% | NO |

[1] CS = "colloid stabilizer" as in WO 2009/101129 A2 is a phosphoric acid ester (a mono-ethyl phosphate and/or diethyl phosphate)
[2] PI = "pickling inhibitor" as in WO 2009/101129 A2 is a thio-urea derivative, a C2-10 alkynol, a triazine derivative, thioglycolic acid, a C1-4 alkyl amine, a hydroxy-C2-8-thiocarboxylic acid and/or a fat alcohol polyglycol ether

Table 2

| Solution # from Table 1 | Sedimentation after 6 hours | Viscosity after preparation | Time until gelification | Example according to the invention ? |
|---|---|---|---|---|
| 1 | - | 7.5 mPa·s | 33 h | NO |
| 2 | - | 7.9 mPa·s | 31 h | NO |
| 3 | - | 10.8 mPa·s | 12 h | NO |
| 4 | 0% | 7.1 mPa·s | 34 h | YES |

(continued)

| Solution # from Table 1 | Sedimentation after 6 hours | Viscosity after preparation | Time until gelification | Example according to the invention ? |
|---|---|---|---|---|
| 5 | 0% | 8.0 mPa·s | 35 h | YES |
| 6 | 0% | 8.6 mPa·s | 32 h | YES |
| 7 | 0% | 8.0 mPa·s | 30 h | YES |
| 8 | 0% | 7.9 mPa·s | 31 h | YES |
| 9 | 0% | 8.8 mPa·s | 29 h | YES |
| 10 | 0% | 7.7 mPa·s | 33 h | YES |
| 11 | 0% | 7.9 mPa·s | 33 h | YES |
| 12 | 0% | 8.3 mPa·s | 30 h | YES |
| 13 | 0% | 7.4 mPa·s | 35 h | YES |
| 14 | 0% | 7.9 mPa·s | 31 h | YES |
| 15 | 0% | 8.0 mPa·s | 30 h | YES |
| 16 | 0% | 7.5 mPa·s | 32 h | YES |
| 17 | 22% | 7.9 mPa·s | 31 h | NO |
| 18 | 29% | 8.7 mPa·s | 24 h | NO |
| 19 | 57% | 9.5 mPa·s | 22 h | NO |
| 20 | 1% | 7.9 mPa·s | 32 h | YES |
| 21 | 60% | 10.1 mPa·s | 19 h | NO |

Table 3

| Sample coated with solution # from Table 1 | Porosity | Gain of imparted tension (relative to Cr-free reference) | Example according to the invention ? |
|---|---|---|---|
| 1 | low | +2.5 MPa | NO |
| 2 | high | Cr-free reference | NO |
| 3 | very high | Cr-free reference | NO |
| 4 | low | +1.9 MPa | YES |
| 5 | low | +2.2 MPa | YES |
| 6 | very low | +2.8 MPa | YES |
| 7 | very low | +2.7 MPa | YES |
| 8 | very low | +2.9 MPa | YES |
| 9 | very low | +3.0 MPa | YES |
| 10 | low | +2.4 MPa | YES |
| 11 | low | +2.6 MPa | YES |
| 12 | low | +2.5 MPa | YES |
| 13 | very low | +2.9 MPa | YES |
| 14 | low | +2.5 MPa | YES |
| 15 | low | +2.7 MPa | YES |
| 16 | very low | +3.1 MPa | YES |

(continued)

| Sample coated with solution # from Table 1 | Porosity | Gain of imparted tension (relative to Cr-free reference) | Example according to the invention ? |
|---|---|---|---|
| 17 | very high | -0.5 MPa | NO |
| 18 | high | +0.3 MPa | NO |
| 19 | high | +0.3 MPa | NO |
| 20 | very low | + 2.8 MPa | YES |
| 21 | high | -0.1 MPa | NO |

**Claims**

1. Grain oriented electrical steel flat product comprising an insulation coating layer being applied on at least one surface of the flat product the insulating coating comprising a matrix containing phosphate and silica, **characterized in that** the insulation coating additionally contains filler particles, said filler particles comprising

   - a core consisting of a high Young's modulus material, the Young's modulus being at least 200 GPa and the material of the core comprising or consisting of $Al_2O_3$, $TiO_2$ and/or $ZrO_2$, and
   - a shell, the shell surrounding said core and consisting of an inorganic material by which the filler particles are bonded to the matrix.

2. Grain oriented electrical steel flat product according to claim 1, **characterized in that** the insulation coating layer comprises 0.1 - 50.0 wt.-% filler particles.

3. Grain oriented electrical steel flat product according to claim 1 or 2, **characterized in that** said filler particles have an average diameter of 10 to 1000 nm.

4. Grain oriented electrical steel flat product according to any one of the preceding claims, **characterized in that** the core of the particles is made from a material which has a Young's modulus of 250 - 650 GPa.

5. Grain oriented electrical steel flat product according to any one of the preceding claims, **characterized in that** the shell of the filler particles comprises or consists of aluminum oxide, aluminum hydroxide and/or silica.

6. Grain oriented electrical steel flat product according to any one of the preceding claims, **characterized in that** the core material of the filler particles makes up 80.0 - 99.9 % by weight of the filler particles.

7. Grain oriented electrical steel flat product according to any one of the preceding claims, **characterized in that** the concentration of filler particles in the insulating layer is from 0.1 - 50.0 wt-%.

8. Grain oriented electrical steel flat product according to any one of the preceding claims, **characterized in that** the phosphate component of the matrix of the insulating layer is in the form of at least one metal phosphate.

9. Grain oriented electrical steel flat product according to any one of the preceding claims, **characterized in that** the silica component of the matrix of the insulating layer is colloidal silica.

10. Grain oriented electrical steel flat product according to any one of the preceding claims, **characterized in that** the insulation layer is free of chromium compounds.

**Patentansprüche**

1. Kornorientiertes Elektrostahl-Flachprodukt, umfassend eine Schicht einer Isolierbeschichtung, die auf wenigstens eine Oberfläche des Flachprodukts aufgetragen ist, wobei die Isolierbeschichtung eine Matrix aus Phosphat und Siliziumdioxid umfasst,
**dadurch gekennzeichnet, dass**
die Isolierbeschichtung zusätzlich Füllpartikel enthält, wobei die Füllpartikel Folgendes umfassen:

   - einen Kern bestehend aus einem Material mit hohem Youngscher Modul, wobei der Youngsche Modul wenigstens 200 GPa beträgt und das Material des Kerns $Al_2O_3$, $TiO_2$ bzw. $ZrO_2$ enthält oder daraus besteht, und
   - einem Mantel, wobei der Mantel den Kern umgibt und aus einem anorganischen Material besteht, durch das die Füllpartikel an die Matrix gebunden sind.

2. Kornorientiertes Elektrostahl-Flachprodukt gemäß Anspruch 1, **dadurch gekennzeichnet, dass** die Schicht der Isolierbeschichtung zwischen 0,1-50,0 Gew.-% Füllpartikel beinhaltet.

3. Kornorientiertes Elektrostahl-Flachprodukt gemäß Anspruch 1 oder 2, **dadurch gekennzeichnet, dass** die Füllpartikel einen durchschnittlichen Durchmesser von 10 bis 1000 nm aufweisen.

4. Kornorientiertes Elektrostahl-Flachprodukt gemäß einem der vorherigen Ansprüche, **dadurch gekennzeichnet, dass** der Kern der Partikel aus einem Material mit einem Youngschen Modul von 250 - 650 GPa besteht.

5. Kornorientiertes Elektrostahl-Flachprodukt gemäß einem der vorherigen Ansprüche, **dadurch gekennzeichnet, dass** der Mantel der Füllpartikel Aluminiumoxid, Aluminiumhydroxid bzw. Siliziumdioxid enthält oder daraus besteht.

6. Kornorientiertes Elektrostahl-Flachprodukt gemäß einem der vorherigen Ansprüche, **dadurch gekennzeichnet, dass** das Kernmaterial der Füllpartikel 80,0-99,9 Gew.-% der Füllpartikel ausmacht.

7. Kornorientiertes Elektrostahl-Flachprodukt gemäß einem der vorherigen Ansprüche, **dadurch gekennzeichnet, dass** die Konzentration der Füllpartikel in der Isolierschicht 0,1 - 50,0 Gew.-% beträgt.

8. Kornorientiertes Elektrostahl-Flachprodukt gemäß einem der vorherigen Ansprüche, **dadurch gekennzeichnet, dass** die Phosphatkomponente in der Matrix der Isolierschicht in Form von wenigstens einem Metallphosphat vorliegt.

9. Kornorientiertes Elektrostahl-Flachprodukt gemäß einem der vorherigen Ansprüche, **dadurch gekennzeichnet, dass** die Siliziumdioxidkomponente in der Matrix der Isolierschicht ein kolloidales Siliziumdioxid ist.

10. Kornorientiertes Elektrostahl-Flachprodukt gemäß einem der vorherigen Ansprüche, **dadurch gekennzeichnet, dass** die Isolierschicht frei von Chromkomponenten ist.

**Revendications**

1. Produit plat d'acier électrique à grains orientés comprenant une couche de revêtement d'isolation appliquée sur au moins une surface du produit plat, le revêtement d'isolation comprenant une matrice contenant du phosphate et de la silice,
**caractérisé en ce que**
le revêtement d'isolation contient en outre des particules de charge, lesdites particules de charge comprenant :

   - un noyau composé d'une matière ayant un module de Young élevé, le module de Young étant d'au moins 200 GPa, et la matière du noyau comprenant ou se composant d'$Al_2O_3$, de $TiO_2$ et/ou de $ZrO_2$, et
   - une enveloppe, l'enveloppe entourant ledit noyau et se composant d'une matière inorganique par laquelle les particules de charge sont liées à la matrice.

2. Produit plat d'acier électrique à grains orientés selon la revendication 1, **caractérisé en ce que** la couche de revêtement d'isolation comprend entre 0,1 et 50,0 % en poids de particules de charge.

3. Produit plat d'acier électrique à grains orientés selon la revendication 1 ou 2, **caractérisé en ce que** lesdites particules de charge ont un diamètre moyen compris entre 10 et 1000 nm.

4. Produit plat d'acier électrique à grains orientés selon l'une quelconque des revendications précédentes, **caractérisé en ce que** le noyau des particules se compose d'une matière ayant un module de Young compris entre 250 et 650 GPa.

5. Produit plat d'acier électrique à grains orientés selon l'une quelconque des revendications précédentes, **caractérisé en ce que** l'enveloppe des particules de charge comprend ou se compose d'oxyde d'aluminium, d'hydroxyde d'aluminium et/ou de silice.

6. Produit plat d'acier électrique à grains orientés selon l'une quelconque des revendications précédentes, **caractérisé en ce que** la matière de noyau des particules de charge représente entre 80,0 et 99,9 % en poids des particules de charge.

7. Produit plat d'acier électrique à grains orientés selon l'une quelconque des revendications précédentes, **caractérisé en ce que** la concentration des particules de charge dans la couche d'isolation est comprise entre 0,1 et 50,0 % en poids.

8. Produit plat d'acier électrique à grains orientés selon l'une quelconque des revendications précédentes, **caractérisé en ce que** le composant phosphate de la matrice de la couche d'isolation se présente sous la forme d'au moins un phosphate de métal.

9. Produit plat d'acier électrique à grains orientés selon l'une quelconque des revendications précédentes, **caractérisé en ce que** le composant silice de la matrice de la couche d'isolation est la silice colloïdale.

10. Produit plat d'acier électrique à grains orientés selon l'une quelconque des revendications précédentes, **caractérisé en ce que** la couche d'isolation ne contient aucun composé de chrome.

High Young's modulus particles (E1)

Phosphate coating Young's modulus (E2)

Glassfilm = Forsterite (Mg2SiO4)

Metallic matrix Fe-Si 3%

Fig. 1

Fig. 3

Fig. 2

Fig. 4a

2 µm

Fig. 4b

2 µm

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1971000075233 B
- US 3856568 A
- WO 2013064260 A1
- EP 0555867 A
- WO 2009101129 A2
- EP 2252722 A
- DE 102010054509 A1
- EP 2180082 A1
- EP 2186924 A1
- JP S54143737 A

**Non-patent literature cited in the description**

- **P.ANDERSON.** Measurement of the stress sensitivity of magnetostriction in electrical steels under distorted waveform conditions. *Journal of Magnetism and Magnetic Materials,* 2008, vol. 320, e583-e588
- Materials Science and Engineering Handbook. YOUNG'S MODULUS OF CERAMICS. CRC Press LLC, 2001, 788